# EUROPÄISCHE PATENTSCHRIFT

(11) **EP 1 040 541 B1**
(45) Veröffentlichungstag und Bekanntmachung des Hinweises auf die Patenterteilung: **24.10.2001**
(21) Anmeldenummer: 98966498.2
(22) Anmeldetag: 20.11.1998
(51) Int. Cl.: H02B 11/167

(54) **LEISTUNGSSCHALTERANLAGE, INSBESONDERE LUFTISOLIERTE LEISTUNGSSCHALTER-EINSCHUBANLAGE DER MITTELSPANNUNGSTECHNIK**
CIRCUIT BREAKER SYSTEM, ESPECIALLY AN AIR-INSULATED WITHDRAWABLE CIRCUIT BREAKER SYSTEM USING MEDIUM VOLTAGE TECHNOLOGY
DISJONCTEUR, NOTAMMENT DISJONCTEUR DEBROCHABLE ISOLE PAR AIR DE LA TECHNOLOGIE MOYENNE TENSION

(30) Priorität: 16.12.1997 DE 19757402
(43) Veröffentlichungstag der Anmeldung: 04.10.2000
(73) Patentinhaber: SIEMENS AKTIENGESELLSCHAFT, 80333 München (DE)
(72) Erfinder: BÖTTCHER, Martin, D-10587 Berlin (DE); KOPKE, Volker, D-91054 Bükenhof (DE); SPIES, Walter, D-91074 Herzogenaurach (DE); SÖNS, Herbert, D-91096 Möhrendorf (DE)
(86) Internationale Anmeldenummer: DE9803487
(87) Internationale Veröffentlichungsnummer: WO9931776

(56) Entgegenhaltungen:
- DE-A- 19 633 524
- US-A- 4 677 524

## Beschreibung

Die Erfindung betrifft eine Leistungsschalteranlage, insbesondere luftisolierte Leistungsschalter-Einschubanlage der Mittelspannungstechnik, mit den Funktionsmerkmalen "Leistungsschalten", "Trennen" und "Erden".

Eine Leistungsschalteranlage der eingangs definierten Art ist u. a. durch die Druckschrift der Siemens AG "Mittelspannungsanlagen, Katalog HA 25.21, 1993", bekannt.
Der Einschub der Leistungsschalteranlage besteht aus einem Zentralwagen, der in unterschiedlichen Ausführungen entsprechende Einschübe aufnehmen und im Ausfahrzustand gänzlich aus dem Einschubraum der Leistungsschalteranlage herausgefahren werden kann. Bei den Einschüben kann es sich - je nach Funktion - sowohl um Vakuum-Leistungsschalter- als auch um Vakuum-Lastschalter-, um Vakuumschütz- oder um Brückenelement-Einschübe für Trenner handeln.
Der Einschubraum ist durch Trennwände zu den benachbarten Schaltfeldern hin abgeschottet und durch eine im Frontrahmen eingesetzte Tür verschließbar. Durch die verschiedenartigen Anlagentypen sind bisher die bewegbaren Teile an die unterschiedlichsten Konstruktionen der Einschübe angepaßt, so daß eine Vielzahl von unterschiedlichen Bauausführungen für diese Leistungsschalteranlagen vorgesehen sind.
Die der Erfindung zugrundeliegende Aufgabe besteht darin, die Typenvielfalt derartiger Leistungsschalteranlagen erheblich einzugrenzen und insbesondere den mechanischen Aufbau dieser Leistungsschalteranlagen insgesamt zu vereinfachen ohne jedoch Einschränkungen hinsichtlich der Leistungsmerkmale hinnehmen zu müssen. Erfindungsgemäß wird dies durch die Merkmale
- 1.1: die Leistungsschalteranlage enthält ein Schaltmodul, das aus funktionsorientierten Modulbausteinen gebildet ist,
- 1.2: die funktionsorientierten Modulbausteine sind durch ein ein Basismodulbaustein, ein Polmodulbaustein und ein Antriebsmodulbaustein realisiert,
- 1.3: der Basismodulbaustein steht mit dem Antriebsmodulbaustein fest in Verbindung, während der Polmudulbaustein auf demselben gradlinig bewegbar angeordnet ist,
erreicht.
Mit der funktionsorientierten Aufgliederung in die Modulbausteine ist eine Anlagenkonfiguration geschaffen, mit der unterschiedliche Anlagenkomponenten in vereinheitlichter Bauweise realisierbar sind. Das Schaltmodul, bei dem der Basismodulbaustein mit dem Antriebsmodulbaustein fest verbunden und der Polmudulbaustein durch Einwirken des Antriebsmodulbausteins auf dem Basismodulbaustein gradlinig verfahren werden kann, ist unabhängig von der Funktion des Einschubes als Vakuum-Leistungsschalter, als Vakuum-Lastschalter, als Vakuumschütz ober als Brückenelement in einheitlicher Bauweise herzustellen. Dies trifft im übertragenden Sinne auch auf die Polmodule und die verschiedenen Antriebe der Leistungsschalteranlagen zu.

Gemäß einer vorteilhaften Ausgestaltung der Erfindung sind die Merkmale
- 2.1: der Polmodulbaustein ist mit einer der Anzahl zu schaltender Phasen entsprechende Zahl von Vakuum-Leistungsschaltern, Vakuumlastschalter, Vakuumschütze oder Brükkenelemente ausgestattet, die jeweils mit einem oberen und einem unteren Trennkontakt in Verbindung stehen,
- 2.2: der Antriebsmodulbaustein ist mit einem Trennantrieb versehen, der den Polmodulbaustein auf Führungswellen des Basismodulbausteins verfährt,
- 2.3: der Antriebsmodulbaustein weist einen die beweglichen Kontakte der Vakuum-Leistungsschalter, der Vakuum-Lastschalter, oder der Vakuumschütze gemeinsam betätigenden Schalter- oder Schützantrieb auf,
- 2.4: der Antriebsmodulbaustein enthält jeweils einen Erderantrieb zur Steuerung eines Kabelanschlußerder-Antriebsstrangs und zur Steuerung eines Sammelschienenerder-Antriebsstrangs,
vorgesehen.

Mit dem vom Schalter- oder Schützantrieb unabhängigen Trennantrieb sind die Bewegungsabläufe auf den Führungswellen in einfacher Weise und gegebenenfalls durch einfache und sichere Verriegelungen untereineinander getrennt steuerbar. Der jeweils separate Erderantrieb für den Kabelanschlußerder-Antriebsstrang und den Sammelschienenerder-Antriebsstrang ermöglicht darüber hinaus weitere konstruktive Vereinfachungen. So sind beispielsweise die Antriebe je nach Anlagenkonzept als Komplettbaustein nachrüstbar oder können auch beim Nichtbedarf jeweils entfallen.

Gemäß einer weiteren vorteilhaften Ausgestaltung der Erfindung sind die Merkmale
- 3.1: der Kabelanschlußerder-Antriebsstrang und der Sammelschienenerder-Antriebsstrang sind im Basismodulbaustein jeweils parallel verlaufend zu den Führungswellen und unterhalb derselben angeordnet,
- 3.2: der Kabelanschlußerder-Antriebsstrang und der Sammelschienenerder-Antriebsstrang weisen im Bereich der Trennkontakte jeweils eine separate Erdungsschalter-Kupplung auf,
vorgesehen.

Mit dem unterhalb und parallel zu den Führungswellen angeordneten Kabelanschlußerder-Antriebsstrang und dem Sammelschienenerder-Antriebsstrang, die im Bereich der Trennkontakte jeweils mit einer separaten Erdungsschalter-Kupplung versehen sind, kann die Kraftübertragung mit einfachen Mitteln vollwirksam zu den nicht dargestellten Kabelanschlußerdern und den Sammelschienenerdern der Leistungsschalteranlage angekoppelt werden.

Eine zusätzliche vorteilhafte Weiterbildung der Erfindung sieht die Merkmale
- 4.1: die Vakuum-Leistungsschalter, die Vakuum-Lastschalter, die Vakuumschütze oder die Brückenelemente sind mit ihrer Längsachse rechtwinklig zur Ebene des Basismodulbausteins und mit ihren Trennkontakten parallel zur Verfahrrichtung des Polmodulbausteins angeordnet,
- 4.2: die Vakuum-Leistungsschalter, die Vakuum-Lastschalter, die Vakuumschütze oder die Brückenelemente sind auf dem Polmodulbaustein jeweils durch zwei einander zugewandte diese teiweise umschließende Polsäulen lagefixiert,
vor.
Durch diese Anordnung der Vakuum-Leistungsschalter, der Vakuum-Lastschalter, der Vakuumschütze oder der Brückenelemente auf dem Polmodulbaustein ist eine sehr kompaktes Schaltmodul für die Leistungsschalteranlage mit minimalen Raumbedarf realisiert.

Die Erfindung ist durch ein figürlich dargestelltes Ausführungsbeispiel in drei Figuren näher erläutert, wobei die
- Figur 1: das Schaltmodul der Leistungsschalteranlage in der Seitenansicht zeigt, während die
- Figuren 2 und 3: das Schaltmodul der Leistungsschalteranlage in der Draufsicht und in der Vorderansicht abbilden.

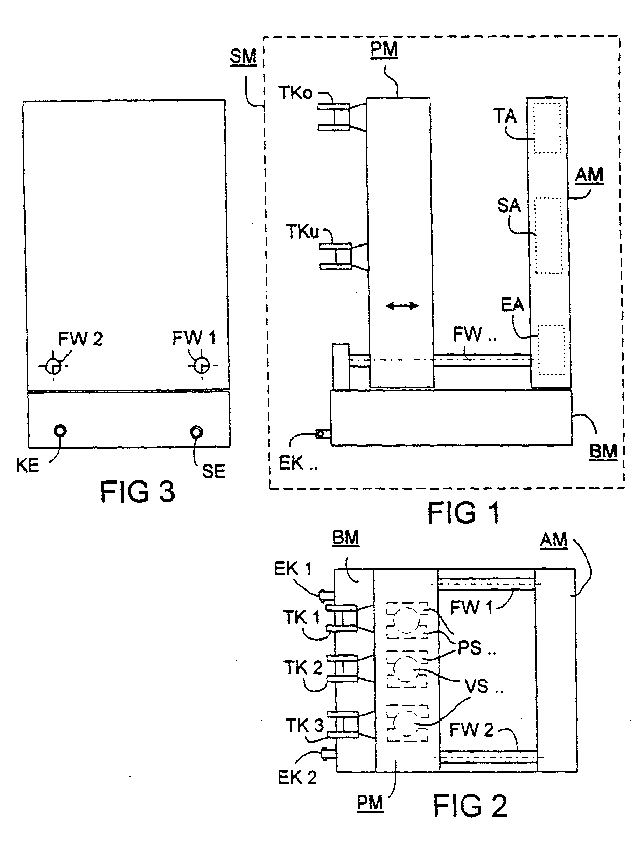

Die Figur 1 zeigt das Schaltmodul SM der Leistungsschalteranlage, das im wesentlichen aus dem Basismodulbaustein BM, dem Polmodulbaustein PM und dem Antriebsmodulbaustein AM gebildet ist. Der Polmodulbaustein PM ist durch den Antriebsmodulbaustein AM auf dem Basismodulbaustein BM entlang der Führungswellen FW... in Pfeilrichtung verfahrbar angeordnet.
Der Polmodulbaustein PM ist außerdem mit oberen und unteren Trennkontakten Tko, Tku ausgestattet, die beim Verfahren des Polmudulbausteins PM aus nicht dargestellten Gegenkontakten den Versorgungsstromkreis durch Trennen unterbrechen. Weiterhin ist ersichtlich, daß der Antriebsmodulbaustein AM den Trennantrieb TA, den Schalter- oder Schützantrieb SA und den Erderantrieb EA aufweisen.
Der Basismodulbaustein BM ist darüber hinaus mit den Erdungsschalter-Kupplungen EK... ausgestattet.

Aus der Figur 3 ist ersichtlich, daß das Schaltmodul SM (Figur 1) der Leistungsschalteranlage mit dem Sammelschienenerden-Antriebsstrang SE und dem Kabelanschlußerder-Antriebsstrang KE ausgestattet ist, die jeweils unterhalb der ersten und zweiten Führungswelle FW1, FW2 positioniert sind. Aus der Figur 2 geht außerdem hervor, daß dem Sammelschienenerder-Antriebsstrang SE (Fig.3)in der Ebene der Trennkontakte TK1, TK2, TK3 die erste Erdungsschalter-Kupplung EK1 zugeordnet ist, während der Kabelanschlußerder-Antriebsstrang KE (Fig. 3) in der gleichen Ebene die weitere Erdungsschalter-Kupplung EK2 enthält.
Desweiteren ist in der Figur 2 erkennbar, daß die Vakuum-Leistungsschalter, die Vakuum-Lastschalter die Vakuumschütze oder die Brückenelemente VS... jeweils von zwei Polsäulen PS teilweise umschlossen sind, und daß die Vakuum-Leistungsschalter, die Vakuumlastschalter, die Vakuumschütze oder die Brückenelemente VS... auf dem Polmodulbaustein PM (Fig. 1) mit ihren Längsachsen senkrecht und nebeneinander auf dem Basismodulbaustein BM positioniert sind.
Mit einer derartigen Ausgestaltung des Schaltmoduls SM ist eine kompakte Bauweise der Leistungsschalteranlage insgesamt erreicht, die sich funktionsunabhängig von den unterschiedlichen Anlagentypen durch die vereinheitlichte Bauform in besonders vorteilhafter Weise ergibt.

## Patentansprüche

1. Leistungsschalteranlage, insbesondere luftisolierte Leistungsschalter-Einschubanlage der Mittelspannungstechnik, mit den Funktionsmerkmalen "Leistungsschalten", "Trennen" und "Erden",
**gekennzeichnet durch** die Merkmale
1.1 die Leistungsschalteranlage enthält ein Schaltmodul (SM), das aus funktionsorientierten Modulbausteinen gebildet ist,
1.2 die funktionsorientierten Modulbausteine sind **durch** ein Basismodulbaustein (BM), ein Polmodulbaustein (PM) und ein Antriebsmodulbaustein (AM) realisiert,
1.3 der Basismodulbaustein (BM) steht mit dem Antriebsmodulbaustein (AM) fest in Verbindung, während der Polmodulbaustein (PM) auf demselben gradlinig bewegbar angeordnet ist.

2. Leistungsschalteranlage nach Patentanspruch 1,
**gekennzeichnet durch** die Merkmale
2.1 der Polmodulbaustein (PM) ist mit einer der Anzahl zu schaltenden Phasen entsprechenden Zahl von Vakuumleistungsschaltern, Vakuumlastschalter, Vakuumschütze oder Brückenelemente (VS...) ausgestattet, die jeweils mit einem oberen und einem unteren Trennkontakt (Tko,Tku) in Verbindung stehen,
2.2 der Antriebsmodulbaustein (AM) ist mit einem Trennantrieb (TA) versehen, der den Polmodulbaustein (PM) auf Führungswellen (FW...) des Basismodulbausteins (BM) verfährt,
2.3 der Antriebsmodulbaustein (AM) weist einen die beweglichen Kontakte der Vakuum-Leistungsschalter, der Vakuu-Lastschalter, oder der Vakuumschütze (VS...) gemeinsam betätigenden Schalter- oder Schützantrieb (SA) auf,
2.4 der Antriebsmodulbaustein (AM) enthält jeweils einen Erderantrieb (EA) zur Steuerung eines Kabelanschlußerder-Antriebsstrangs (KE) und zur Steuerung eines Sammelschienenerder-Antriebsstrangs (SE).

3. Leistungsschalteranlage nach den Patentansprüchen 1 und 2, **gekennzeichnet durch** die Merkmale
3.1 der Kabelanschlußerder-Antriebsstrang (KE) und der Sammelschienenerder-Antriebsstrang (SE) sind im Basismodulbaustein (BM) jeweils parallel verlaufend zu den Führungsweilen (FW1, 2) und unterhalb derselben angeordnet,
3.2 der Kabelanschlußerder-Antriebsstrang (KE) und der Sammelschienenerder-Antriebsstrang (SE) weisen im Bereich der Trennkontakte (TK...) jeweils eine separate Erdungsschalter-Kupplung (EK1 und EK2) auf.

4. Leistungsschalteranlage nach Patentanspruch 2, **gekennzeichnet durch** die Merkmale
4.1 die Vakuum-Leistungsschalter, die Vakuum-Lastschalter, die Vakuumschütze oder die Brückenelemente (VS...) sind mit ihrer Längsachse rechtwinklig zur Ebene des Basismodulbausteins (BM) und mit ihren Trennkontakten (TK...) parallel zur Verfahrrichtung des Polmodulbausteins (PM) angeordnet,
4.2 die Vakuum-Leistungsschalter, die Vakuum-Lastschalter, die Vakuumschütze oder die Brückenelemente (VS...) sind auf dem Polmodulbaustein (PM) jeweils **durch** zwei einander zugewandte diese teiweise umschließende Polsäulen (PS...) lagefixiert.

## Claims

1. Power breaker assembly, in particular an air-insulated power breaker withdrawable insert assembly for medium voltages, having the functional features "switch power", "isolate" and "earth", **characterized by** the features
1.1 the power breaker assembly contains a switching module (SM) that is formed from function-oriented modules,
1.2 the function-oriented modules are implemented by means of a base module (BM), a pole module (PM) and a drive module (AM),
1.3 the base module (BM) is permanently connected to the drive module (AM), while the pole module (PM) is arranged on the same such that it can be moved rectilinearly.

2. Power breaker assembly according to Patent Claim 1, **characterized by** the features
2.1 the pole module (PM) is equipped with a number, corresponding to the number of phases to be switched, of vacuum power breakers, vacuum load switches, vacuum contactors or bridge elements (VS...), each of which is connected to an upper and a lower isolating contact (Tko, Tku),
2.2 the drive module (AM) is provided with an isolating drive (TA), which moves the pole module (PM) on guide shafts (FW...) on the base module (BM),
2.3 the drive module (AM) has a switch or contactor drive (SA) which operates the moveable contacts of the vacuum power breakers, the vacuum load switches or the vacuum contactors (VS...) together,
2.4 the drive module (AM) in each case contains an earthing drive (EA) for controlling a cable-connection earthing drive train (KE) and for controlling a busbar earthing drive train (SE).

3. Power breaker assembly according to Patent Claims 1 and 2, **characterized by** the features
3.1 the cable-connection earthing drive train (KE) and the busbar earthing drive train (SE) are arranged in the base module (BM) in each case running parallel to the guide shafts (FW1, 2) and underneath the same,
3.2 the cable-connection earthing drive train (KE) and the busbar earthing drive train (SE) in each case have a separate earthing-switch clutch (EK1 and EK2) in the area of the isolating contacts (TK...).

4. Power breaker assembly according to Patent Claim 2, **characterized by** the features
4.1 the vacuum power breakers, the vacuum load switches, the vacuum contactors or the bridge elements (VS...) are arranged with their longitudinal axis at right angles to the plane of the base module (BM) and with their isolating contacts (TK...) parallel to the direction of travel of the pole module (PM),
4.2 the vacuum power breakers, the vacuum load switches, the vacuum contactors or the bridge elements (VS...) are fixed in position on the pole module (PM), in each case by means of two pole columns (PS...) which partially enclose them and face each other.

## Revendications

1. Installation de disjoncteur, notamment installation à tiroir de disjoncteur isolé par de l'air de la technique de moyenne tension, comportant les caractéristiques de fonctionnement "fermeture", "ouverture" et "mise à la terre",
**caractérisée par** les dispositions
1.1 l'installation de disjoncteur comporte un module (SM) de commutation qui est formé de composants modulaires orientés fonction,
1.2 les composants modulaires orientés fonction sont réalisés par un composant (BM) modulaire de base, un composant (PM) modulaire polaire et un composant (AM) modulaire d'entraînement,
1.3 le composant (BM) modulaire de base est en liaison fixe avec le composant (AM) modulaire d'entraînement, tandis que le composant (PM) modulaire polaire est monté mobile rectilignement sur celui-là.

2. Installation de disjoncteur suivant la revendication 1,
**caractérisé par** les dispositions
2.1 le composant (PM) modulaire polaire est muni d'un nombre de disjoncteurs à vide, d'interrupteurs de charge à vide, de contacteurs-interrupteurs à vide ou d'éléments (VS...) en pont qui correspond au nombre des phases à commuter et qui sont en liaison respectivement avec un contact (TKo) de séparation supérieur et un contact (TKu) de séparation inférieur,
2.2 le composant (AM) modulaire d'entraînement est muni d'un dispositif (TA) d'entraînement de séparation qui déplace le composant (PM) modulaire polaire sur des arbres (FW...) de guidage du composant (BM) modulaire de base,
2.3 le composant (AM) modulaire d'entraînement comporte un dispositif (SA) d'entraînement d'interrupteurs ou de contacteurs-interrupteurs actionnant en commun les contacts mobiles des disjoncteurs à vide, des interrupteurs de charge à vide ou des contacteurs-interrupteurs (VS...) à vide,
2.4 le composant (AM) modulaire d'entraînement comporte respectivement un dispositif (EA) d'entraînement de mise à la terre pour la commande d'une branche (KE) d'entraînement de mise à la terre de raccordement de câble et pour la commande d'une branche (SE) d'entraînement de mise à la terre de barre collectrice.

3. Installation de disjoncteur suivant les revendications 1 et 2,
**caractérisée par** les dispositions
3.1 la branche (KE) d'entraînement de mise à la terre de raccordement de câble et la branche (SE) d'entraînement de mise à la terre de barre collectrice sont montées dans le composant (BM) modulaire de base en s'étendant respectivement parallèlement aux arbres (FW1, FW2) de guidage et en-dessous de ceux-ci,
3.2 la branche (KE) d'entraînement de mise à la terre de raccordement de câble et la branche (SE) d'entraînement de mise à la terre de barre collectrice comportent dans la région des contacts (TK...) de séparation respectivement un accouplement (EK1 et EK2) d'interrupteur de mise à la terre séparé.

4. Installation de disjoncteur suivant la revendication 2,
**caractérisée par** les dispositions
4.1 les disjoncteurs à vide, les interrupteurs de charge à vide, les contacteurs-interrupteurs à vide ou les éléments (VS...) en pont sont disposés en ayant leur axe longitudinal à angle droit par rapport au plan du composant (BM) modulaire de base et en ayant leur contact (TK...) de séparation parallèle à la direction de déplacement du composant (PM) modulaire polaire,
4.2 les disjoncteurs à vide, les interrupteurs de charge à vide, les contacteurs-interrupteurs à vide ou les éléments (VS...) en pont sont immobilisés en position sur le composant (PM) modulaire polaire respectivement par deux colonnes (PS...) polaires tournées l'une vers l'autre et entourant en partie ces éléments.
